# EUROPÄISCHE PATENTANMELDUNG

(11) **EP 4 276 332 A1**
(43) Veröffentlichungstag der Anmeldung: **15.11.2023**
(21) Anmeldenummer: 23172033.5
(22) Anmeldetag: 08.05.2023
(51) Int. Cl.: F16H 49/00

(54) **SPANNUNGSWELLENGETRIEBE**

(30) Priorität: 10.05.2022 LU 502059
(71) Anmelder: Ovalo GmbH, 65555 Limburg (DE)
(72) Erfinder:
(74) Vertreter: Hoffmann, Jürgen

(57) **Zusammenfassung**

Die Erfindung betrifft ein Spannungswellengetriebe mit einem Circularspline, einem Flexspline und mit einem Wellengenerator. Die Erfindung betrifft außerdem einen Aktuator, der ein solches Spannungswellengetriebe sowie einen Antriebsmotor aufweist. Das Spannungswellengetriebe zeichnet sich dadurch aus, dass der Wellengenerator relativ zu dem Flexspline axial verschiebbar angeordnet ist.

## Beschreibung

Die Erfindung betrifft ein Spannungswellengetriebe mit einem Circularspline, einem Flexspline und mit einem Wellengenerator.

Die Erfindung betrifft außerdem einen Aktuator, der ein solches Spannungswellengetriebe sowie einen Antriebsmotor aufweist.

Die Erfindung betrifft ferner einen Roboter, der ein solches Spannungswellengetriebe oder einen solchen Aktuator aufweist, und ein Robotergelenk, das wenigstens ein solches Spannungswellengetriebe oder einen solchen Aktuator aufweist, und ein Fahrwerk, das ein solches Spannungswellengetriebe oder einen solchen Aktuator aufweist, sowie eine Lenkung, insbesondere PKW-Lenkung oder LKW-Lenkung, die ein solches Spannungswellengetriebe oder einen solchen Aktuator aufweist.

Die Erfindung betrifft darüber hinaus ein Verfahren zum Betreiben eines solchen Spannungswellengetriebes, sowie ein Verfahren zum Betreiben eines Roboters, der ein solches Spannungswellengetriebe oder einen solchen Aktuator aufweist.

Die Erfindung betrifft außerdem ein motorisiertes Gelenk mit einem solchen Spannungswellengetriebe und darüber hinaus einen programmierbaren Bewegungsautomaten, der ein solches Spannungswellengetriebe oder ein solches motorisiertes Gelenk beinhaltet.

Ein Spannungswellengetriebe besitzt zumeist ein starres, ringförmiges, innenverzahntes Zahnrad, das als Circularspline bezeichnet wird, und ein flexibles außenverzahntes Zahnrad, das teilweise im Inneren des starren innenverzahnten Zahnrads angeordnet ist und das als Flexspline bezeichnet wird, wobei die Verzahnung des Circularspline mit der Verzahnung des Flexspline (zumeist an zwei gegenüberliegenden Stellen) in Eingriff steht. Der Circularspline und der Flexspline weisen eine unterschiedliche Zahl von Zähnen auf. Der Flexspline kann in Form eines Flextopfes ausgebildet sein. Innerhalb des Flexsplines ist zumeist ein Wellengenerator angeordnet. Der zumeist elliptische Wellengenerator drückt den Flexspline in eine elliptische Form und bringt so die Außenverzahnung des Flexsplines mit der Innenverzahnung des Circularsplines an jedem Ende der Ellipsen-Hauptachse miteinander in Eingriff.

Ein Spannungswellengetriebe mit einem Flextopf ist beispielsweise aus US 6 050 155 A bekannt.

Neben Spannungswellengetrieben der eingangs genannten Art, die einen Flextopf mit einerrohrförmigen Flextopfwandung und einem Flextopfboden aufweisen, gibt es auch Spannungswellengetriebe anderer Art. Beispielsweise sind aus DE 11 2011 105 253 T5 und aus DE 11 2013 004 710 T5 Spannungswellengetriebe vom Zylinderhuttyp bekannt.

Es ist die Aufgabe der vorliegenden Erfindung, ein Spannungswellengetriebe anzugeben, das besonders flexibel einsetzbar ist.

Die Aufgabe wird durch ein Spannungswellengetriebe gelöst, das dadurch gekennzeichnet ist, dass der Wellengenerator relativ zu dem Flexspline axial verschiebbar angeordnet ist.

Die Erfindung hat den ganz besonderen Vorteil, dass wenigstens ein Parameter des Spannungswellengetriebes, beispielsweise das Losbrechmoment, das Leerlaufmoment, das Durchdrehmoment, das Rückreibmoment, die Steifigkeit, das Spiel oder die Lost-Motion verändert werden kann, indem die axiale Position des Wellengenerators relativ zu dem Flexspline verändert wird.

Unter dem Begriff "Losbrechmoment" wird insbesondere das Drehmoment verstanden, das zur Überwindung einer Haftreibung und zur Einleitung einer Gleitreibung nötig ist.

Unter dem Begriff "Leerlaufmoment" oder "Durchdrehmoment" wird insbesondere das Drehmoment verstanden, das nötig ist, um den Antrieb, insbesondere das Formungsmittel des Wellengenerators, des Spannungswellengetriebes zu drehen, wenn keine Last an das Spannungswellengetriebe angekoppelt ist.

Unter dem Begriff "Rückreibmoment" wird insbesondere das Drehmoment verstanden, das nötig ist, um den Getriebeausgang (beispielsweise den Circularspline bei festgehaltenem Flexspline oder den Flexspline bei festgehaltenem Circularspline) zu drehen, wenn an den Getriebeeingang (Wellengenerator) kein Antriebsmotor und keine Last angekoppelt ist.

Unter dem Begriff "Steifigkeit" wird insbesondere die torsionale Steifigkeit des Getriebes zwischen Ab- und Antrieb verstanden,

Unter dem Begriff "Spiel" (Backlash) wird insbesondere das Ausmaß einer möglichen rotatorischen Bewegung einer Komponente des Getriebes ohne aufgebrachtes Drehmoment verstanden.

Unter dem Begriff "Lost Motion" wird insbesondere der Bewegungswinkel in beide Richtungen verstanden, der am Getriebeausgang möglich ist, bevor eine Bewegung am Getriebeeingang auftritt.

In erfindungsgemäßer Weise wurde erkannt, dass eine besondere Eigenschaft von Spannungswellengetrieben ausgenutzt werden kann. In unmontiertem Zustand weist ein Flexspline eine zylinderförmige und im Querschnitt kreisrunde flexible, dünne Wandung auf, die an einem Ende mit einem Topfboden (Topfgetriebe) oder einer Krempe (Hutgetriebe) versehen ist. An dem Topfboden bzw. an der Krempe kann eine Welle drehfest angeordnet werden. Am anderen Ende weist ein Flexspline seine Außenverzahnung auf, die mit der Circularsplineverzahnung nach dem Einfügen des Wellengenerators an zumeist zwei gegenüberliegenden Stellen in Zahneingriff kommt (auch ein Eingriff an drei oder mehr Stellen ist grundsätzlich möglich).

Durch das Einfügen des (zumeist elliptischen) Wellengenerators wird der Flexspline an dem Ende, das die Außenverzahnung aufweist, in eine entsprechende (zumeist elliptische) Form gedrückt. In Richtung der Ellipsenhochachse wird der Flexspline radial auseinander gedrückt. In der Ebene der Ellipsenhochachse verläuft die rohrförmige Wandung des Flexsplines ausgehend von dem Topfboden bzw. der Krempe keilförmig auseinander. In der Ebene der Ellipsenniedrigachse verläuft die rohrförmige Wandung des Flexsplines ausgehend von dem Topfboden bzw. der Krempe keilförmig zusammen.

In erfindungsgemäßer Weise wurde erkannt, dass die den Zahneingriff der Außenverzahnung des Flexsplines mit der Innenverzahnung des Circularsplines verursachenden radialen Kräfte sowie das Biegeverhalten der Wandung des Flexsplines sogar im laufenden Betrieb des Spannungswellengetriebes beeinflusst werden können, indem der Wellengenerator relativ zu dem Flexspline axial verstellt wird. So nimmt beispielsweise das Rücktreibmoment zu, wenn der Wellengenerator axial in dem Flexspline hinein (also auf den Topfboden bzw. die Krempe zu) bewegt wird. Umgekehrt nimmt das Rücktreibmoment ab, wenn der Wellengenerator in dem Flexspline axial von dem Topfboden bzw. der Krempe weg bewegt wird. Das Rücktreibmoment ist das Drehmoment, das am Flexspline zumindest aufgewendet werden muss, um (bei festgehaltenem Circularspline) eine Drehung des Formungskörpers des Wellengenerators zu erreichen.

Vorzugsweise ist das Spannungswellengetriebe derart ausgebildet, dass der Wellengenerator wahlweise in eine von wenigstens zwei unterschiedlichen Einstellungen verstellbar ist, in denen das Spannungswellengetriebe jeweils, insbesondere dauerhaft, betreibbar ist. Insbesondere kann das Verstellen beinhalten, dass ein unmittelbar mit dem Flexspline in Kontakt stehender Teil des Wellengenerators wahlweise in eine von wenigstens zwei unterschiedlichen Einstellungen, insbesondere relativ zu dem Flexspline, verstellbar ist, in denen das Spannungswellengetriebe betreibbar ist. Insbesondere kann das Spannungswellengetriebe dazu ausgebildet sein, dass der Wellengenerator in die ausgewählte Einstellung verstellbar ist, ohne den Betrieb des Spannungswellengetriebes unterbrechen zu müssen. Allerdings kann auch vorgesehen sein, das Spannungswellengetriebe während des Verstellens anzuhalten.

Bei einer ganz besonders vorteilhaften Ausführung kann vorteilhaft vorgesehen sein, dass der Wellengenerator in eine von wenigstens zwei unterschiedlichen Einstellungen (in denen das Spannungswellengetriebe jeweils, insbesondere dauerhaft, betreibbar ist) verstellt werden kann, in der ein mit dem Flexspline in unmittelbarem Kontakt stehender Teil des Wellengenerators axial versetzt zu der Innenverzahnung des Circularsplines und/oder der Außenverzahnung des Flexsplines angeordnet ist. Hierbei kann vorgesehen sein, dass der mit dem Flexspline in unmittelbarem Kontakt stehende Teil des Wellengenerators in der anderen Einstellung ebenfalls axial versetzt zu der Innenverzahnung des Circularsplines und/oder der Außenverzahnung des Flexsplines angeordnet ist. Es ist jedoch auch möglich, dass der mit dem Flexspline in unmittelbarem Kontakt stehende Teil des Wellengenerators in der anderen Einstellung nicht axial versetzt zu der Innenverzahnung des Circularsplines und/oder der Außenverzahnung des Flexsplines angeordnet ist.

Alternativ oder zusätzlich kann vorteilhaft vorgesehen sein, dass der Wellengenerator wahlweise in eine von wenigstens zwei unterschiedlichen Einstellungen verstellbar ist, in denen das Spannungswellengetriebe jeweils betreibbar ist, wobei sich der Wellengenerator in jeder der Einstellungen vollständig innerhalb des von dem Flexspline umgebenen Raumes angeordnet ist.

Insbesondere ist ein Verfahren zum Betreiben eines Spannungswellengetriebes besonders vorteilhaft, das die Schritte beinhaltet: Auswählen einer von wenigstens zwei unterschiedlichen Einstellungen des Wellengenerators; Verstellen des Wellengenerators in die ausgewählte Einstellung; Betreiben des Spannungswellengetriebes in der ausgewählten Einstellung. Insbesondere kann vorteilhaft vorgesehen sein, dass das Verstellen des Wellengenerators in die ausgewählte Einstellung erfolgt, ohne den Betrieb des Spannungswellengetriebes zu unterbrechen. Allerdings ist es auch möglich, das Spannungswellengetriebe während des Verstellens anzuhalten.

Mit einer Einstellung, in der das Spannungswellengetriebe jeweils, insbesondere dauerhaft, betreibbar ist, ist keine Einstellung gemeint, wie sie vorübergehend für einen ganz kurzen Moment bei Vorrichtungen auftritt, bei denen das Spannungswellengetriebe als mechanischer Schalter gebraucht wird, indem der gesamte Wellengenerator axial aus dem Flexspline herausgezogen wird, um den Drehmomentfluss zu unterbrechen. Eine solche Vorrichtung ist in der US-Patentanmeldung US 2015 0184 700 A1 beschrieben.

Bei einer ganz besonders vorteilhaften Ausführung weist der Wellengenerator ein Lager und ein mittels des Lagers relativ zu dem Flexspline rotierbar gelagertes Formungsmittel auf, welches das Lager und/oder den Flexspline zu einer von der Kreisform verschiedenen Form formt.

Vorzugsweise ist das Lager des Wellengenerators als Wälzlager ausgebildet.

Beispielsweise kann das Lager als einreihiges oder mehrreihiges Kugellager ausgebildet sein. Ganz allgemein kann das Lager Wälzkörper aufweisen, die als Kugeln, Rollen, insbesondere Toroidalrollen, oder Kegel ausgebildet sind. Es ist jedoch beispielsweise auch möglich, dass das Lager des Wellengenerators als Gleitlager ausgebildet ist.

Das Formungsmittel kann beispielsweise als eine ovale, insbesondere elliptische, Scheibe ausgebildet sein oder eine ovale, insbesondere elliptische, Scheibe aufweisen. Alternativ kann das Formungsmittel durch einen ovalen, insbesondere elliptischen, Abschnitt einer Welle gebildet sein. Es ist alternativ auch möglich, dass das Formungsmittel Teil eines Two-Rollers oder eines Three-Rollers ist. Ein Two-Roller bzw. Three-Rollers kann beispielsweise durch einen rotierbar gelagerten zwei- bzw. dreiarmigen Träger gebildet sein, an dessen freien Enden jeweils ein Lager, insbesondere ein Wälzlager, angeordnet ist.

Bei einer besonders robusten und einfach herstellbaren Ausführung ist das Lager relativ zu dem Formungsmittel axial unbeweglich angeordnet. Bei einer solchen Ausführung kann insbesondere vorgesehen sein, dass das Formungsmittel zusammen mit dem Lager, das insbesondere als Wälzlager ausgebildet sein kann, axial relativ zu dem Flexspline verstellt wird. Insbesondere kann das Lager, insbesondere die Außenseite eines Lageraußenrings des Lagers, relativ zu dem Flexspline axial gleitgelagert sein. Beispielsweise ist es auch möglich, dass das Lager derart an dem Formungsmittel befestigt ist, dass das Lager ausschließlich gemeinsam mit dem Formungsmittel axial verschoben werden kann. Die Befestigung kann form-, stoff- und/oder reibschlüssiger Natur sein.

Bei einer anderen Ausführung ist das Formungsmittel mittels des Lagers relativ zum dem Flexspline axial verschiebbar gelagert. Bei einer solchen Ausführung hat das Lager eine Doppelfunktion, nämlich einerseits die Funktion, das Formungsmittel relativ zu dem Flexspline rotierbar zu lagern, und andererseits die Funktion, das Formungsmittel relativ zu dem Flexspline axial verstellbar zu lagern. Insbesondere zum Realisieren einer solchen Ausführung kann vorteilhaft vorgesehen sein, dass die Wälzkörper des Lagers unmittelbar mit dem Flexspline in Kontakt stehen. Eine solche Ausführung kann alternativ oder zusätzlich derart ausgebildet sein, dass das (vorzugsweise als Wälzlager ausgebildete) Lager keinen Lageraußenring aufweist. Alternativ oder zusätzlich kann, insbesondere bei einer solchen Ausführung, vorteilhaft vorgesehen sein, dass die Wälzkörper des Lagers, insbesondere ausschließlich, in einer umlaufenden Führungsnut eines Lagerinnenrings oder in einer umlaufenden Führungsnut des Formungskörpers geführt sind.

Bei einer ganz besonders vorteilhaften Ausführung kann der Wellengenerator im laufenden Betrieb des Spannungswellengetriebes relativ zum dem Flexspline axial verschoben werden. Eine solche Ausführung hat den ganz besonderen Vorteil, dass das System, beispielsweise der Roboter oder das Fahrzeug, in dem das erfindungsgemäße Spannungswellengetriebe verbaut ist, nicht angehalten werden muss, um zumindest einen der Getriebeparameter zu ändern.

Das Spannungswellengetriebe kann, wie bereits erwähnt, vorteilhaft derart betrieben werden, dass wenigstens einer der Parameter des Spannungswellengetriebes aus der Gruppe: Losbrechmoment, Leerlaufmoment, Durchdrehmoment, Rückreibmoment, Steifigkeit, Spiel oder Lost-Motion, eingestellt wird, indem die axiale Position des Wellengenerators relativ zu dem Flexspline verändert wird.

Bei einer besonders vorteilhaften Ausführung ist eine, insbesondere elektrisch angetriebene, Linearverschiebevorrichtung zum axialen Verschieben wenigstens des Wellengenerators relativ zu dem Flexspline vorhanden. Die Linearverschiebevorrichtung kann an eine elektrische oder elektronische Steuerungsvorrichtung angeschlossen sein. Insbesondere kann die Linearverschiebevorrichtung Teil eines Regelkreises des Systems, beispielsweise eines Roboters oder eines Fahrzeugs, in dem das erfindungsgemäße Spannungswellengetriebe verbaut ist, sein.

Die Linearverschiebevorrichtung kann beispielsweise wenigstens einen Spindeltrieb und/oder eine Hydraulik und/oder ein Hebelgetriebe und/oder eine Kurbel und/oder einen Exzenter aufweisen.

Der Flexspline kann eine radialflexible Hülse aufweisen, die an einem ihrer Enden drehfest mit einer radial nach außen gerichteten Krempe verbunden ist, während sie an dem anderen Ende die Außenverzahnung aufweist. Alternativ kann der Flexspline eine radialflexible Hülse aufweisen, die an einem ihrer Enden drehfest mit einem radial nach innen gerichteten Boden oder einer radial nach innen gerichteten Kreisscheibe verbunden ist, während sie an dem anderen Ende die Außenverzahnung aufweist.

Bei einer besonderen Ausführung weist das Formungsmittel wenigstens zwei axial zueinander versetzte Lagersitze auf. Bei einer solchen Ausführung kann vorteilhaft vorgesehen sein, dass eine axiale Verstellung des Wellengenerators dadurch bewirkt wird, dass lediglich das radialflexible Lager relativ zu dem Flexspline und relativ zu dem Formungsmittel axial, stufenlos oder in Stufen, verstellt wird, während das Formungsmittel seine axiale Position relativ zu dem Flexspline beibehält.

Bei einer besonders flexibel einsetzbaren Ausführung weist der Wellengenerator eine Ausgleichskupplung, insbesondere eine Oldhamkupplung oder eine Klauenkupplung, auf. Alternativ kann vorteilhaft vorgesehen sein, dass der Wellengenerator Teil einer Ausgleichskupplung, insbesondere einer Oldhamkupplung oder einer Klauenkupplung, ist. Eine Ausgleichkupplung hat den besonderen Vorteil, dass Fluchtungs- und Winkelfehler ausgeglichen werden.

Von ganz besonderem Vorteil ist ein Aktuator, der ein erfindungsgemäßes Spannungswellengetriebe sowie einen Antriebsmotor aufweist. Der Antriebsmotor kann insbesondere dazu ausgebildet und angeordnet sein, das Formungsmittel zur Rotation anzutreiben. Hierfür kann eine Abtriebswelle des Antriebsmotors drehfest mit dem Formungsmittel des Wellengenerators verbunden sein.

Beispielsweise kann der Circularspline dazu ausgebildet und angeordnet sein, das Spannungswellengetriebe in einem Gehäuse oder einem übergeordneten System zu halten, während der Flexspline als Abtrieb fungiert. Alternativ kann der Flexspline dazu ausgebildet und angeordnet sein, das Spannungswellengetriebe in einem Gehäuse oder einem übergeordneten System zu halten, während der Circularspline als Abtrieb fungiert. Natürlich ist es auch möglich, das Spannungswellengetriebe in einem Umkehrbetrieb zu betreiben, bei dem das Formungsmittel (oder eine damit verbundene Abtriebswelle) als Abtrieb fungiert oder als Differentialgetriebe zu betreiben.

Beispielsweise können ein Gehäuse und/oder ein Stator des Antriebsmotors relativ zu dem Circularspline drehfest angeordnet sein und/oder drehfest mit dem Circularspline verbunden sein. Es ist insbesondere auch möglich, dass der Antriebsmotor und das Spannungswellengetriebe ein gemeinsames Gehäuse aufweisen.

Bei einer besonderen Ausführung ist der Antriebsmotor gemeinsam mit dem Wellengenerator relativ zu dem Flexspline verschiebbar angeordnet. Beispielsweise kann hierzu wenigstens ein federbelasteter Spindeltrieb vorhanden sein, mittels dem ein Stator und/oder ein Gehäuse des Antriebsmotors mit dem Circularspline verbunden sind. Der Spindeltrieb kann seinerseits mittels eines separaten elektrischen Stellmotors angetrieben sein.

Von ganz besonderem Vorteil ist ein Roboter, insbesondere Industrieroboter, der wenigstens ein erfindungsgemäßes Spannungswellengetriebe oder einen erfindungsgemäßen Aktuator beinhaltet. Beispielsweise kann der Roboter dazu ausgebildet sein, in einem Programmiermodus, insbesondere für die Durchführung des Playback-Verfahrens, durch direktes Führen entlang einer vorgesehenen Bewegungsbahn programmiert zu werden und in einem Arbeitsmodus eine Bewegung entlang der auf diese Weise programmierten Bewegungsbahn auszuführen, wobei in dem Programmiermodus eine andere axiale Stellung des Wellengenerators relativ zu dem Flexspline eingestellt wird, als in einem Arbeitsmodus. Beispielsweise kann (durch Vergrößern des axialen Abstandes des Wellengenerators von dem Boden bzw. der Krempe des Flexsplines) auf diese Weise für den Programmiermodus ein geringeres Rücktreibmoment eingestellt werden, um das direkte, insbesondere manuelle, Führen, beispielsweise eines von einem Roboterarm des Roboters gehaltenen Werkzeugs, für den Bediener zu erleichtern, während für den Arbeitsbetrieb (durch Verringern des axialen Abstandes des Wellengenerators von dem Boden bzw. der Krempe des Flexsplines) des Roboters eine höhere Steifigkeit sowie ein geringeres Spiel und eine geringe Lost-Motion eingestellt wird, was jedoch gleichzeitig ein höheres Rücktreibmoment zur Folge hat.

Beim Playback-Verfahren kann insbesondere vorgesehen sein, dass der Bediener eine vorgesehene Bahn durch direktes, manuelles Führen des Roboterarms, vorzugsweise unter Berücksichtigung der Orientierung einer Roboterhand des Roboters, abfährt. Es kann hierbei vorgesehen sein, dass eine Steuerungsvorrichtung die jeweils aktuelle Position und Orientierung, beispielsweise in festgelegten oder festlegbaren Zeitabständen, abspeichert. Der Vorteil dieser Art der Programmierung ist, dass sich auch komplexe Bewegungspfade mit wenigen Programmierkenntnissen leicht programmieren lassen, wobei das Abfahren der gewünschten Bewegungsbahn für den Bediener erfindungsgemäß erleichtert wird. Der Roboter kann vorteilhaft beispielsweise als Lackierroboter oder als Schweißroboter ausgebildet sein.

Von ganz besonderem Vorteil ist ein Robotergelenk, insbesondere ein Robotergelenk für einen Industrieroboter, der wenigstens ein erfindungsgemäßes Spannungswellengetriebe oder einen erfindungsgemäßen Aktuator beinhaltet. Beispielsweise kann das Robotergelenk als Teil eines Roboters dazu ausgebildet sein, wahlweise in einen Programmiermodus oder einen Arbeitsmodus geschaltet zu werden, indem der Wellengenerator relativ zu dem Flexspline axial verstellt wird. Es ist insbesondere möglich, dass ein Roboter oder ein Roboterarm mehrere erfindungsgemäße Robotergelenke aufweist. Insbesondere kann vorteilhaft vorgesehen sein, dass nur bei einem Teil der Robotergelenke für den Programmiermodus ein geringeres Rücktreibmoment eingestellt wird, um den Bediener (falls erforderlich) beim direkten Führen darin zu unterstützen, ungewollte Bewegungskomponenten zu vermeiden, während die Ausführung von gewollten Bewegungskomponenten erleichtert wird.

Von ganz besonderem Vorteil ist ein Fahrwerk, insbesondere aktives Fahrwerk für ein Kraftfahrzeug, das wenigstens ein erfindungsgemäßes Spannungswellengetriebe oder einen erfindungsgemäßen Aktuator aufweist. Bei einem solchen Fahrwerk ist es ermöglicht, einen Parameter des Spannungswellengetriebes fahrsituationsabhängig, insbesondere automatisch, zu ändern. Beispielsweise kann das Fahrwerk eine elektromechanische Dämpfung aufweisen, deren Steifigkeit dadurch veränderbar ist, dass der Wellengenerator des Spannungswellengetriebes des Fahrwerks relativ zu dem Flexspline axial verstellt wird. Beispielsweise kann auf diese Weise für eine schnelle Geradeausfahrt ein anderes Verhalten des aktiven Fahrwerks eingestellt werden als für eine Kurvenfahrt.

Alternativ oder zusätzlich kann bei einem einen erfindungsgemäßen Aktuator beinhaltenden aktiven Fahrwerk für ein Kraftfahrzeug, mittels dem der Höhenstand der Karosserie einstellbar ist, das Rücktreibmoment (durch Verringern des axialen Abstandes des Wellengenerators von dem Boden bzw. der Krempe des Flexsplines) so weit erhöht werden, dass die Gewichtskraft der Karosserie nicht ausreicht, das Spannungswellengetriebe zurückzutreiben. Ein solches aktives Fahrwerk hat den ganz besonderen Vorteil, dass ein eingestellter Höhenstand (beispielsweise nach einem Abstellen des Fahrzeuges) erhalten bleibt, ohne den Antriebsmotor des aktiven Fahrwerks hierfür bestromen zu müssen und ohne eine separate Blockiervorrichtung vorsehen zu müssen.

Das erfindungsgemäße Fahrwerk hat den ganz besonderen Vorteil, dass es ermöglicht, einen erhöhten Fahrkomfort und/oder eine erhöhte Fahrsicherheit zu erreichen.

Von ganz besonderem Vorteil ist eine Lenkung, insbesondere eine PKW-Lenkung oder LKW-Lenkung, die wenigstens ein erfindungsgemäßes Spannungswellengetriebe oder einen erfindungsgemäßen Aktuator aufweist. Die Lenkung kann als Servolenkung und/oder als Überlagerungslenkung ausgebildet. Beispielsweise kann vorteilhaft vorgesehen sein, wenigstens ein Parameter des Spannungswellengetriebes fahrsituationsabhängig, beispielsweise in Abhängigkeit davon, ob ein Parkvorgang, ein Rangiervorgang oder eine schnelle Autobahnfahrt stattfindet, verändert werden, indem der Wellengenerator relativ zu dem Flexspline axial verstellt wird.

In den Zeichnungen ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein erstes Ausführungsbeispiel eines erfindungsgemäßen Aktuators, der ein erfindungsgemäßes Spannungswellengetriebe beinhaltet, in einer ersten Einstellung,
- Fig. 2: das erste Ausführungsbeispiel eines erfindungsgemäßen Aktuators in einer zweiten Einstellung,
- Fig. 3: ein zweites Ausführungsbeispiel eines erfindungsgemäßen Aktuators, der ein erfindungsgemäßes Spannungswellengetriebe beinhaltet, in einer ersten Einstellung,
- Fig. 4: das zweite Ausführungsbeispiel eines erfindungsgemäßen Aktuators in einer zweiten Einstellung,
- Fig. 5: ein drittes Ausführungsbeispiel eines erfindungsgemäßen Aktuators, der ein erfindungsgemäßes Spannungswellengetriebe beinhaltet, in einer ersten Einstellung,
- Fig. 6: das dritte Ausführungsbeispiel eines erfindungsgemäßen Aktuators in einer zweiten Einstellung,
- Fig. 7: ein viertes Ausführungsbeispiel eines erfindungsgemäßen Aktuators, der ein erfindungsgemäßes Spannungswellengetriebe beinhaltet, in einer ersten Einstellung, und
- Fig. 8: das vierte Ausführungsbeispiel eines erfindungsgemäßen Aktuators in einer zweiten Einstellung.

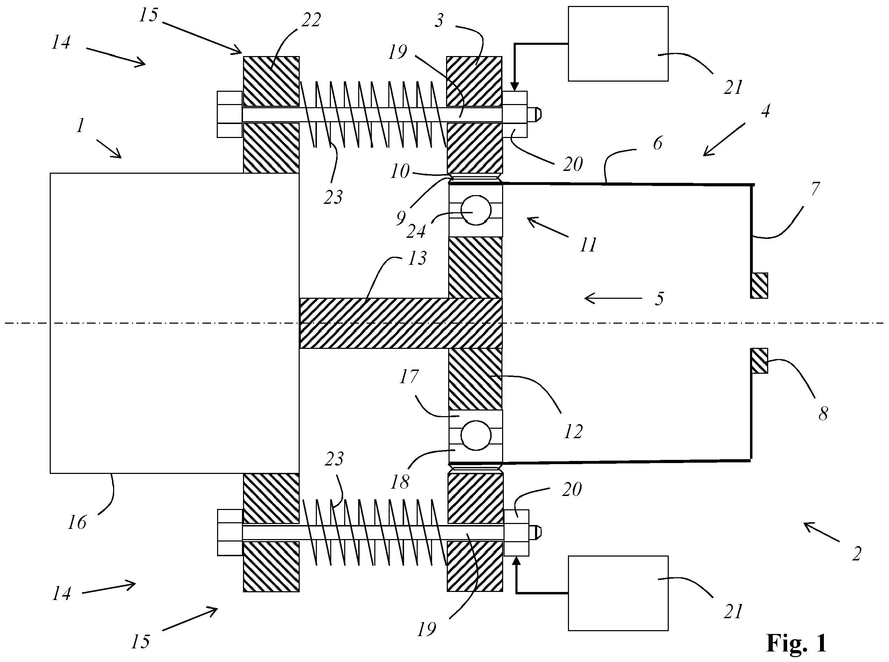

Fig. 1 zeigt ein erstes Ausführungsbeispiel eines erfindungsgemäßen Aktuators, der einen Antriebsmotor 1 aufweist. Dem Antriebsmotor 1 ist ein Ausführungsbeispiel eines erfindungsgemäßen Spannungswellengetriebes 2 triebtechnisch nachgeschaltet.

Das Spannungswellengetriebe 2 weist einen Circularspline 3, einen Flexspline 4 und einen Wellengenerator 5 auf.

Der Flexspline 4 weist eine rohrförmige, radialflexible Hülse 6 auf, die an einem ihrer Enden drehfest (vorzugsweise durch einstückige Herstellung) mit einer radial nach innen gerichteten Kreisscheibe 7 verbunden ist. An der Kreisscheibe 7 befindet sich ein Befestigungsflansch 8 zum Ankoppeln einer (nicht dargestellten) Welle, beispielsweise einer Abtriebswelle. Am anderen Ende weist die rohrförmige, radialflexible Hülse 6 eine Außenverzahnung 9 auf, die mit einer Circularsplineverzahnung 10 des Circularsplines 3 an zwei gegenüberliegenden Stellen in Zahneingriff steht.

Der Wellengenerator 5 weist ein radialflexibles Lager 11 auf, das als Wälzlager ausgebildet ist und das einen Lagerinnenring 17 sowie einen Lageraußenring 18 sowie Wälzkörper 24 aufweist. Der Wellengenerator 5 weist außerdem ein mittels des Lagers 11 relativ zu dem Flexspline 4 rotierbar gelagertes Formungsmittel 12 auf, welches das Lager 11 und das mit der Außenverzahnung 9 versehene Ende des Flexsplines 4 zu einer von der Kreisform verschiedenen Form formt und dadurch den Zahneingriff mit der Außenverzahnung 9 mit der Circularsplineverzahnung 10 an zwei gegenüberliegenden Stellen (oder an drei oder mehr Stellen) bewirkt.

Das Formungsmittel 12 ist als eine ovale, insbesondere elliptische, Scheibe ausgebildet, die drehfest mit einer Abtriebswelle 13 des Antriebsmotors 1 verbunden ist. Das Formungsmittel 12 fungiert als Getriebeantrieb, während der Befestigungsflansch 8 als Abtrieb fungiert, wobei der Circularspline 3 (neben anderen Funktionen) die Funktion hat, das Spannungswellengetriebe hinsichtlich des im Betrieb auftretenden Drehmoments (über die weiter unten beschriebene Linearverschiebevorrichtung 14) an dem Gehäuse 16 des Antriebsmotors abzustützen.

Der Wellengenerator 5 ist relativ zu dem Flexspline 4 stufenlos axial verstellbar angeordnet. Insbesondere hierzu ist der Lageraußenring 18 an seiner Außenumfangsfläche relativ zu dem Flexspline 4 axial verschiebbar gleitgelagert.

Um eine Verstellung bewirken zu können, ist der Circularspline 3 über eine Linearverschiebevorrichtung 14, die mehrere Spindeltriebe 15 aufweist, mit dem Gehäuse 16 des Antriebsmotors 1 verbunden. Jeder Spindeltrieb 15 weist eine Gewindespindel 19 sowie eine Spindelmutter 20 auf. Zum Rotieren der Spindelmuttern 20 weist die Linearverschiebevorrichtung 14 mehrere synchron angetriebene (und nur ganz schematisch dargestellte) Stellmotore 21 auf.

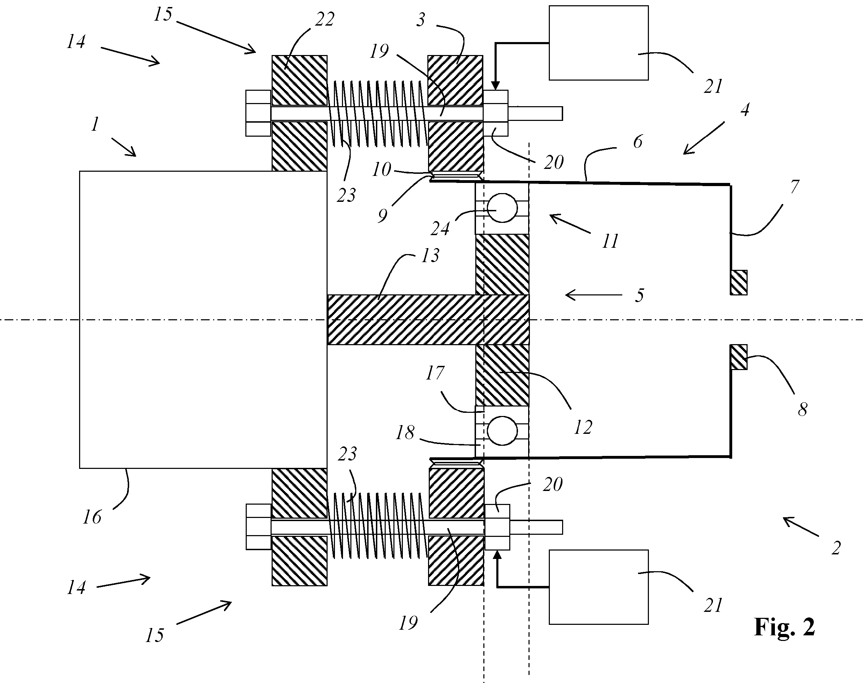

Mittels der Linearverschiebevorrichtung 14 kann der Antriebsmotor 1 zusammen mit der Antriebswelle 13 und dem Wellengenerator 5 relativ zu dem Flexspline 4 axial verschoben werden. Beispielsweise kann der Wellengenerator 5 durch eine Betätigung der Linearverschiebevorrichtung 14 in Richtung auf die kreisförmige Scheibe 7 axial verschoben werden. Bei diesem Vorgang nähern sich der Circularspline 3 und ein fest an dem Gehäuse 16 des Antriebsmotors 1 angeordneter Abstützflansch 22 einander an, wobei zwischen dem Circularspline 3 und dem Abstützflansch 22 angeordnete Federn 23 komprimiert werden, was in Figur 2 dargestellt ist. In dieser Einstellung ist ein Teil des Wellengenerators 5 axial versetzt zu der Circularsplineverzahnung 10 und zur Außenverzahnung 9 des Flexsplines 4 angeordnet; nämlich der Teil, der sich in der Figur zwischen den beiden gestrichelten Linien befindet.

Insbesondere ist bei diesem Ausführungsbeispiel der Lageraußenring (als der unmittelbar mit dem Flexspline in Kontakt stehende Teil des Wellengenerators) zusammen mit den übrigen Bauteilen des Wellengenerators wahlweise in eine von wenigstens zwei unterschiedlichen Einstellungen (Einstellung gemäß Figur 1 und Einstellung gemäß Figur 2) verstellbar, in denen das Spannungswellengetriebe betreibbar ist.

Bei einer umgekehrten Betätigung der Linearverschiebevorrichtung 14 werden der Antriebsmotor 1 und der Wellengenerator 5 durch die Rückstellkraft der Federn 23 relativ zu dem Flexspline 4 in die entgegengesetzte Richtung verschoben.

In den Figuren 1 und 2 ist ein Querschnitt durch die Ebene der Hochachse des Formungskörpers 12 dargestellt. In dieser Ebene verläuft die Wandung der rohrförmigen, radialflexiblen Hülse 6 des Flexsplines 4 ausgehend von der kreisförmigen Scheibe 7 keilförmig auseinander. In der (nicht dargestellten) Ebene der Niedrigachse des Formungskörpers 12 verläuft die Wandung der rohrförmigen, radialflexiblen Hülse 6 des Flexsplines 4 ausgehend von der kreisförmigen Scheibe 7 keilförmig zusammen.

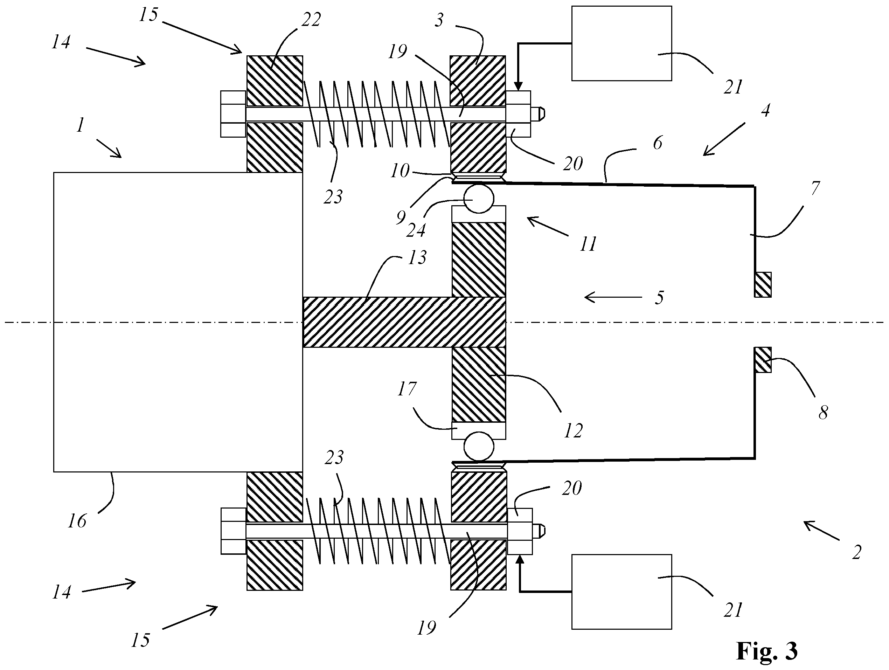

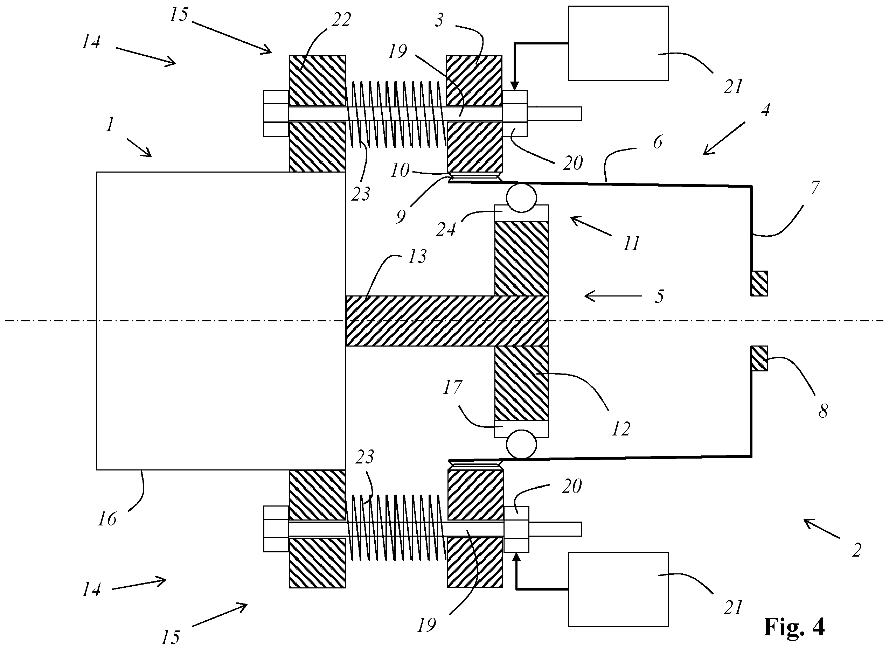

Die Figuren 3 und 4 zeigen ein zweites Ausführungsbeispiel eines erfindungsgemäßen Aktuators, der sich von dem in den Figuren 1 und 2 dargestellten Ausführungsbeispiel dadurch unterscheidet, dass das Lager 11 keinen Lageraußenring 18 aufweist. Vielmehr hat das Lager 11 bei dieser Ausführung eine Doppelfunktion, nämlich einerseits die Funktion, das Formungsmittel 12 relativ zu dem Flexspline 4 rotierbar zu lagern, und andererseits die Funktion, das Formungsmittel 12 relativ zu dem Flexspline 4 axial verstellbar zu lagern. Die Wälzkörper 24 des Lagers 11 stehen bei diesem Ausführungsbeispiel unmittelbar mit dem Flexspline 4 in Kontakt.

Insbesondere sind bei diesem Ausführungsbeispiel die Wälzkörper24 (als der unmittelbar mit dem Flexspline in Kontakt stehende Teil des Wellengenerators) zusammen mit den übrigen Bauteilen des Wellengenerators wahlweise in eine von wenigstens zwei unterschiedlichen Einstellungen (Einstellung gemäß Figur 3 und Einstellung gemäß Figur 4) verstellbar, in denen das Spannungswellengetriebe betreibbar ist.

In der in Figur 4 dargestellten Einstellung ist ein Teil des Wellengenerators 5 axial versetzt zu der Circularsplineverzahnung 10 und zur Außenverzahnung 9 des Flexsplines 4 angeordnet.

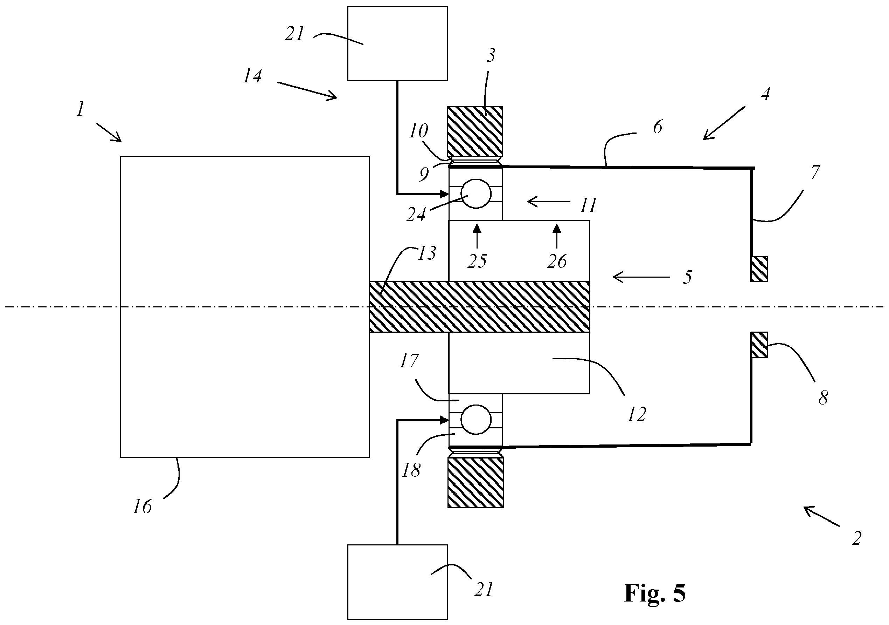

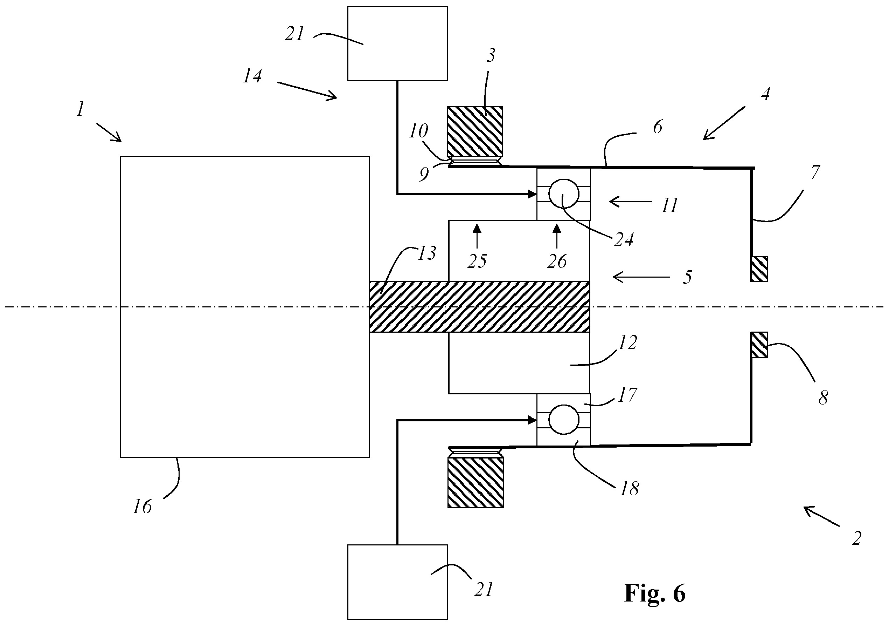

Die Figuren 5 und 6 zeigen ein drittes Ausführungsbeispiel eines erfindungsgemäßen Aktuators, der einen Antriebsmotor 1 aufweist. Dem Antriebsmotor 1 ist ein Ausführungsbeispiel eines erfindungsgemäßen Spannungswellengetriebes 2 triebtechnisch nachgeschaltet.

Das Spannungswellengetriebe 2 weist einen Circularspline 3, einen Flexspline 4 und einen Wellengenerator 5 auf.

Der Flexspline 4 weist eine rohrförmige, radialflexible Hülse 6 auf, die an einem ihrer Enden drehfest (vorzugsweise durch einstückige Herstellung) mit einer radial nach innen gerichteten Kreisscheibe 7 verbunden ist. An der Kreisscheibe 7 befindet sich ein Befestigungsflansch 8 zum Ankoppeln einer (nicht dargestellten) Welle, beispielsweise einer Abtriebswelle. Am anderen Ende weist die rohrförmige, radialflexible Hülse 6 eine Außenverzahnung 9 auf, die mit einer als Innenverzahnung ausgebildeten Circularsplineverzahnung 10 des Circularsplines 3 an zwei gegenüberliegenden Stellen in Zahneingriff steht.

Der Wellengenerator 5 weist ein radialflexibles Lager 11 auf, das als Wälzlager ausgebildet ist und das einen Lagerinnenring 17 sowie einen Lageraußenring 18 sowie Wälzkörper 24 aufweist. Der Wellengenerator 5 weist außerdem ein mittels des Lagers 11 relativ zu dem Flexspline 4 rotierbar gelagertes Formungsmittel 12 auf, welches das Lager 11 und das mit der Außenverzahnung 9 versehene Ende des Flexsplines 4 zu einer von der Kreisform verschiedenen Form formt und dadurch den Zahneingriff mit der Außenverzahnung 9 mit der Circularsplineverzahnung 10 an zwei gegenüberliegenden Stellen bewirkt.

Das Formungsmittel 12 ist als ein ovaler, insbesondere elliptischer, Körper ausgebildet, der drehfest mit einer Abtriebswelle 13 des Antriebsmotors 1 verbunden ist. Das Formungsmittel 12 fungiert als Getriebeantrieb, während der Befestigungsflansch 8 als Abtrieb fungiert, wobei der Circularspline 3 (neben anderen Funktionen) die Funktion hat, das Spannungswellengetriebe hinsichtlich des im Betrieb auftretenden Drehmoments an einer (nicht dargestellten) übergeordneten Struktur, beispielsweise relativ zu einem Träger, insbesondere einem Träger eines Fahrwerks oder eines Roboters, oder einem Systemgehäuse oder an dem Gehäuse 16 oder einem Stator des Antriebsmotors abzustützen.

Der Außenumfang des Formungsmittels 12 weist mehrere axial zueinander versetzte Lagersitze 25, 26 auf, in die das Wälzlager 11 (vorzugsweise axial gleitgelagert) axial verschoben werden kann. Insbesondere kann ein Rotationsverhinderungsmittel vorhanden sein, das zwar ein axiales Verschieben des Lagerinnenrings 17 relativ zu dem Formungsmittel 12 zulässt, jedoch eine Rotation des Lagerinnenrings 17 relativ zu dem Formungsmittel 12 verhindert. Das Rotationsverhinderungsmittel kann beispielsweise eine in dem Formungsmittel 12 in Axialrichtung verlaufende Nut aufweisen, in die ein radial nach innen gerichteter Vorsprung des Lagerinnenrings 17 eingreift.

Bei dieser Ausführung wird die axiale Verstellung des Wellengenerators 5 dadurch bewirkt, dass lediglich das radialflexible Lager 11 relativ zu dem Flexspline 4 und relativ zu dem Formungsmittel 12 axial, stufenlos oder in Stufen, (vorzugsweise mittels eines Stellmotors 21) verstellt wird, während das Formungsmittel 12 seine axiale Position relativ zu dem Flexspline 4 beibehält.

Auch in den Figuren 5 und 6 ist ein Querschnitt durch die Ebene der Hochachse des Formungskörpers 12 dargestellt. In dieser Ebene verläuft die Wandung der rohrförmigen, radialflexiblen Hülse 6 des Flexsplines 4 ausgehend von der kreisförmigen Scheibe 7 keilförmig auseinander. In der (nicht dargestellten) Ebene der Niedrigachse des Formungskörpers 12 verläuft die Wandung der rohrförmigen, radialflexiblen Hülse 6 des Flexsplines 4 ausgehend von der kreisförmigen Scheibe 7 keilförmig zusammen. Die (nicht dargestellte) Ebene der Niedrigachse verläuft senkrecht zur Zeichenebene durch die Rotationsmittelachse.

Insbesondere ist bei diesem Ausführungsbeispiel der Lageraußenring (als der unmittelbar mit dem Flexspline in Kontakt stehende Teil des Wellengenerators) zusammen mit den übrigen Bauteilen des Lagers 11 wahlweise in eine von wenigstens zwei unterschiedlichen Einstellungen (Einstellung gemäß Figur 5 und Einstellung gemäß Figur 6) verstellbar, in denen das Spannungswellengetriebe betreibbar ist.

In der in Figur 6 dargestellten Einstellung ist der Wellengenerator 5 axial versetzt zu der Circularsplineverzahnung 10 und zur Außenverzahnung 9 des Flexsplines 4 angeordnet.

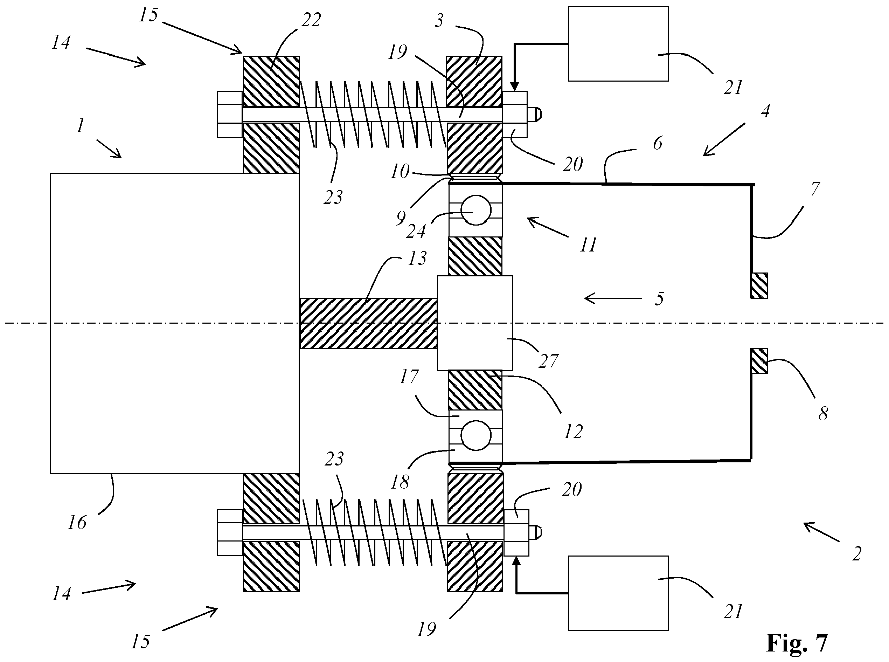

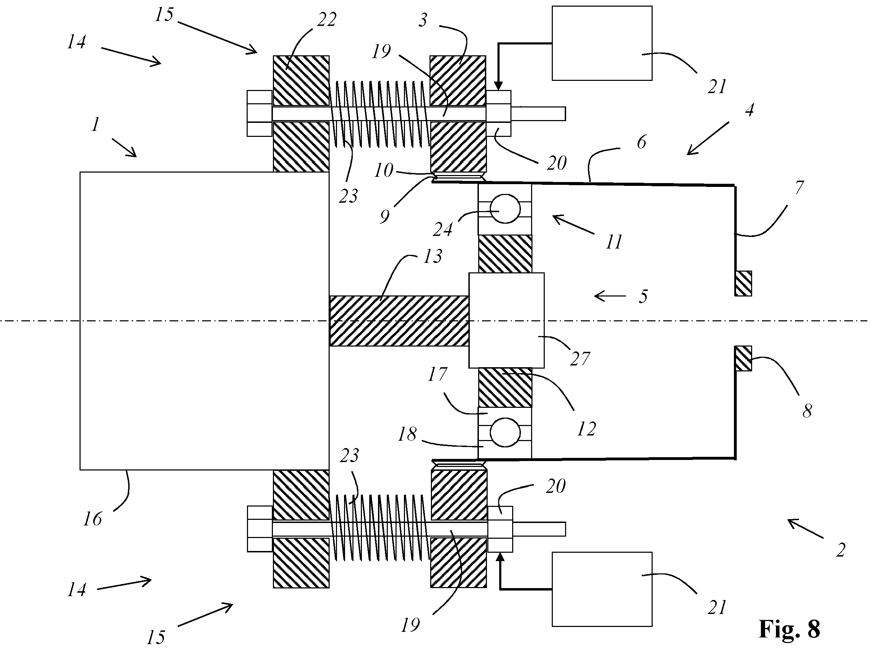

Die Figuren 7 und 8 zeigen ein viertes Ausführungsbeispiel eines erfindungsgemäßen Aktuators, der ein erfindungsgemäßes Spannungswellengetriebe beinhaltet, in zwei unterschiedlichen Einstellungen des Wellengenerators 5 relativ zu dem Flexspline 4.

Das vierte Ausführungsbeispiel entspricht im Wesentlichen dem ersten Ausführungsbeispiel, wobei jedoch der Wellengenerator 5 eine Ausgleichskupplung 27 aufweist, die beispielsweise als Oldham-Kupplung oder eine Klauenkupplung ausgebildet sein kann. Die Ausgleichskupplung kann insbesondere dazu ausgebildet sein, Fluchtungs- und/oder Winkelfehler, insbesondere der Abtriebswelle 13 relativ zu dem Wellengenerator 5 und/oder relativ zu der radialflexiblen Hülse 6 und oder relativ zu dem Circularspline 3 auszugleichen.

### Bezugszeichenliste:

- 1: Antriebsmotor
- 2: Spannungswellengetriebe
- 3: Circularspline
- 4: Flexspline
- 5: Wellengenerator
- 6: rohrförmige, radialflexible Hülse
- 7: Kreisscheibe
- 8: Befestigungsflansch
- 9: Außenverzahnung
- 10: Circularsplineverzahnung
- 11: Lager
- 12: Formungsmittel
- 13: Abtriebswelle
- 14: Linearverschiebevorrichtung
- 15: Spindeltrieb
- 16: Gehäuse
- 17: Lagerinnenring
- 18: Lageraußenring
- 19: Gewindespindel
- 20: Spindelmutter
- 21: Stellmotore
- 22: Abstützflansch
- 23: Feder
- 24: Wälzkörper
- 25: Lagersitz
- 26: Lagersitz
- 27: Ausgleichskupplung

## Patentansprüche

1. Spannungswellengetriebe mit einem Circularspline (3), einem Flexspline (4) und mit einem Wellengenerator (5), **dadurch gekennzeichnet, dass** der Wellengenerator (5) relativ zu dem Flexspline (4) stufenlos oder in Stufen axial verstellbar angeordnet ist.

2. Spannungswellengetriebe nach Anspruch 1, **dadurch gekennzeichnet, dass** der Wellengenerator (5) ein Lager (11) und ein mittels des Lagers (11) relativ zu dem Flexspline (4) rotierbar gelagertes Formungsmittel (12) aufweist, welches das Lager (11) und/oder den Flexspline (4) zu einer von der Kreisform verschiedenen Form formt.

3. Spannungswellengetriebe nach Anspruch 2, **dadurch gekennzeichnet, dass**
a. das Lager (11) als Wälzlager, das Wälzkörper (24) aufweist, ausgebildet ist oder dass
b. das Lager (11) als Wälzlager ausgebildet ist, das Wälzkörper (24) aufweist, die als Kugeln, Rollen, insbesondere Toroidalrollen, oder Kegel ausgebildet sind.

4. Spannungswellengetriebe nach einem der Ansprüche 1 bis 3, **dadurch gekennzeichnet, dass**
a. das Formungsmittel (12) als eine ovale, insbesondere elliptische, Scheibe ausgebildet ist oder eine ovale, insbesondere elliptische, Scheibe aufweist, oder dass
b. das Formungsmittel (12) durch einen ovalen, insbesondere elliptischen, Abschnitt einer Welle ausgebildet ist, oder dass
c. das Formungsmittel (12) Teil eines Two-Rollers oder eines Three-Rollers ist.

5. Spannungswellengetriebe nach einem der Ansprüche 2 bis 4, **dadurch gekennzeichnet, dass**
a. das Lager (11) relativ zu dem Formungsmittel (12) axial unbeweglich angeordnet ist, und/oder dass
b. das Lager (11) relativ zu dem Flexspline (4) axial gleitgelagert ist, und/oder dass.
c. ein Lageraußenring (18) des Lagers relativ zu dem Flexspline (4) gleitgelagert ist, und/oder dass.
d. das Formungsmittel (12) mittels des Lagers relativ zum dem Flexspline (4) axial verschiebbar gelagert ist, und/oder dass.
e. die Wälzkörper des Lagers unmittelbar mit dem Flexspline (4) in Kontakt stehen.
f. das Lager (11) keinen Lageraußenring (18) aufweist, und/oder dass.
g. die Wälzkörper (24) des Lagers (11), insbesondere ausschließlich, in einer umlaufenden Führungsnut eines Lagerinnenrings (17) oder in einer umlaufenden Führungsnut des Formungskörpers (12) geführt sind.

6. Spannungswellengetriebe nach einem der Ansprüche 1 bis 5, **dadurch gekennzeichnet, dass**
a. eine, insbesondere elektrisch angetriebene, Linearverschiebevorrichtung (14) zum axialen Verschieben des wenigstens des Wellengenerators (5) relativ zu dem Flexspline (4) vorhanden ist, oder dass
b. eine, insbesondere elektrisch angetriebene, Linearverschiebevorrichtung (14) zum axialen Verschieben des Wellengenerators (5) relativ zu dem Flexspline (4) vorhanden ist, die wenigstens einen Spindeltrieb und/oder eine Hydraulik und/oder ein Hebelgetriebe und/oder eine Kurbel und/oder einen Exzenter aufweist.

7. Spannungswellengetriebe nach einem der Ansprüche 1 bis 6, **dadurch gekennzeichnet, dass** der Flexspline (4) eine radialflexible Hülse (6) aufweist,
a. die an einem ihrer Enden drehfest mit einer radial nach außen gerichteten Krempe verbunden ist, und/oder
b. die an einem ihrer Enden drehfest mit einem radial nach innen gerichteten Boden oder einer radial nach innen gerichteten Kreisscheibe (7) verbunden ist.

8. Spannungswellengetriebe nach einem der Ansprüche 1 bis 8, **dadurch gekennzeichnet, dass**
a. das Formungsmittel (12) wenigstens zwei axial zueinander versetzte Lagersitze aufweist, und/oder dass
b. der Wellengenerator eine Ausgleichskupplung, insbesondere eine Oldhamkupplung oder eine Klauenkupplung, aufweist oder dass der Wellengenerator Teil einer Ausgleichskupplung, insbesondere einer Oldhamkupplung oder einer Klauenkupplung, ist, und/oder dass
c. der Wellengenerator (5) im laufenden Betrieb des Spannungswellengetriebes relativ zum dem Flexspline (4) axial verschiebbar ist.

9. Aktuator, der ein Spannungswellengetriebe nach einem der Ansprüche 1 bis 8 sowie einen Antriebsmotor (1) aufweist.

10. Aktuator nach Anspruch 9, **dadurch gekennzeichnet, dass**
a. eine Abtriebswelle (13) des Antriebsmotors (1) drehfest mit dem Formungsmittel (12) des Wellengenerators (5) verbunden ist, und/oder dass
b. ein Gehäuse (16) und/oder ein Stator des Antriebsmotors (1) relativ zu dem Circularspline (3) drehfest angeordnet ist und/oder drehfest mit dem Circularspline (3) verbunden ist, und/oder dass
c. der Antriebsmotor (1) gemeinsam mit dem Wellengenerator (5) relativ zu dem Flexspline (4) verschiebbar angeordnet ist.

11. Roboter, insbesondere Industrieroboter, oder Robotergelenk beinhaltend wenigstens ein Spannungswellengetriebe nach einem der Ansprüche 1 bis 8 oder beinhaltend einen Aktuator nach Anspruch 9 oder 10.

12. Fahrzeugkomponente, die wenigstens ein Spannungswellengetriebe nach einem der Ansprüche 1 bis 8 oder einen Aktuator nach Anspruch 9 oder 10 aufweist.

13. Fahrzeugkomponente nach Anspruch 12, **dadurch gekennzeichnet, dass** die Fahrzeugkomponente als
a. Fahrwerk, insbesondere aktives Fahrwerk für ein Kraftfahrzeug, oder als
b. Lenkung, insbesondere PKW-Lenkung oder LKW-Lenkung, oder als
c. Servolenkung und/oder als Überlagerungslenkung ausgebildet ist.

14. Verfahren zum Betreiben eines Spannungswellengetriebes nach einem der Ansprüche 1 bis 8, **dadurch gekennzeichnet, dass** wenigstens einer der Parameter des Spannungswellengetriebes aus der Gruppe: Losbrechmoment, Leerlaufmoment, Durchdrehmoment, Rückreibmoment, Steifigkeit, Spiel oder Lost-Motion eingestellt wird, indem die axiale Position des Wellengenerators (5) relativ zu dem Flexspline (4) verändert wird.

15. Verfahren zum Betreiben eines Roboters, der ein Spannungswellengetriebe nach einem der Ansprüche 1 bis 8 oder einen Aktuator nach Anspruch 9 oder 10 aufweist, wobei in einem Programmiermodus, insbesondere für ein Playback-Verfahren, des Roboters eine andere axiale Stellung des Wellengenerators (5) relativ zu dem Flexspline (4) eingestellt wird, als in einem Arbeitsmodus des Roboters, insbesondere wobei
die axiale Stellung des Wellengenerators (5) relativ zu dem Flexspline (4) im Programmiermodus derart gewählt wird, dass das Spannungswellengetriebe ein geringeres Rücktreibmoment aufweist, als im Arbeitsmodus.
